# EUROPEAN PATENT SPECIFICATION

(11) **EP 4 341 601 B1**
(45) Date of publication and mention of the grant of the patent: **05.11.2025**
(21) Application number: 21732117.3
(22) Date of filing: 19.05.2021
(51) Int. Cl.: F17D 5/00, F16L 27/10

(54) **METHOD FOR THE EVALUATION OF THE STATE OF USE OF A COMPENSATION JOINT**
VERFAHREN ZUR BEWERTUNG DES BENUTZUNGSZUSTANDS EINER KOMPENSATIONSFUGE
PROCÉDÉ D'ÉVALUATION DE L'ÉTAT D'UTILISATION D'UN JOINT DE COMPENSATION

(43) Date of publication of application: 27.03.2024
(73) Proprietor: ISIF S.r.l., 52028 Terranuova Bracciolini (IT)
(72) Inventor: ODORI, Mauro, 52026 Castelfranco Piandiscò (IT)
(74) Representative: Ruzzu, Giammario
(86) International application number: PCT/IB2021/054325
(87) International publication number: WO 2022/243728

(56) References cited:
- WO-A1-2009/112813
- WO-A1-2014/096019
- WO-A1-2018/167668
- CN-A- 108 253 303
- CN-A- 108 317 328
- US-A1- 2007 284 112

## Description

### TECHNICAL FIELD

The present invention is part of the technical sector relating to surveillance systems, and more precisely of systems for the surveillance of lines for the transport of fluid hydrocarbons (methane or oil pipelines) or, more generally, of other fluids, such as aqueducts.

More particularly, the invention refers to a method for the continuous monitoring of a limited section, or of a particular component of the aforementioned lines, such as a compensation joint, installed in a site that can be critical for the integrity of the aforementioned section. or component.

### BACKGROUND ART

It is known that the transport of hydrocarbons (mainly methane and petroleum or its derivatives) from production sites to storage sites, and from these to distribution and use sites, is mainly carried out by means of methane or oil pipelines, which are transport lines consisting of underground, surface or underwater pipes. Each line is generally divided into sections, separated by compression or pumping stations, necessary over long distances to restore sufficient pressure and flow values of the hydrocarbons. There are also other components on the line, such as compensation joints, flow shut-off valves, reduction units, etc.

Many of these components, especially as regards the distribution lines, are installed inside closed artifacts, such as cabins, of limited size and often barely sufficient to accommodate the aforementioned components, and therefore difficult to access for maintenance. The compensation joints can also be inserted between a section of line and a terminal connecting it to a pumping station or other equipment, or on a section of line located on a loading/unloading jetty, intended to be connected to a corresponding terminal of a LNG carrier or oil tanker, etc.

The method for evaluating the state of use of a compensation joint object of the invention, which finds particular but not exclusive application in monitoring systems for lines for the transport of hydrocarbons, can be applied indifferently both to lines for the transport of methane than to those for the transport of liquid hydrocarbons.

As previously stated, the aforesaid method can be applied to other similar pipelines, such as aqueducts. However, for the sake of simplicity of description, reference will be made hereinafter to methane pipelines, considering all considerations extended also to oil pipelines and other types of lines for the transport of hydrocarbons, as well as to other similar pipelines.

### TECHNICAL PROBLEM

Due to their nature, methane pipelines cross territories with very different topographical and morphological characteristics, that can be flat or mountainous, arid or with high humidity, with compact terrain or at risk of subsidence, heavily anthropized or deserted and difficult to access, at least in a short time. In any case, due to the importance of the continuity of the supply and distribution of methane, it is essential to ensure that every single section of the methane pipeline is always operational and in perfect efficiency, in order to avoid interruptions in the transport and distribution of the product, except in completely exceptional and unpredictable cases. Even in these sporadic cases, however, it is essential to immediately identify the site and the type of problem, and to intervene in a very short time to solve it and restore the flow of methane. In order to minimize emergency situations, the pipelines are generally supervised by teams of specially trained maintenance technicians. However, this technique turns out to be inadequate in several cases, and does not allow to guarantee sufficient control of the state of a pipeline, especially in some of its most critical sections.

A particularly significant example is related to the stretches of pipeline that cross inaccessible, unstable and subject to landslides territories, which are often found in areas that are scarcely populated and accessible, as they are far from roads or other communication routes. In these cases it is difficult, and therefore also very expensive, to guarantee a sufficiently attentive and constant surveillance service. Furthermore, with the surveillance techniques currently used it is substantially impossible to carry out an early warning action, which in many cases would prevent the occurrence of breakages in the pipes or serious malfunctions of the other components of the pipeline. For example, in areas with unstable and unstable ground, a subsidence of the ground on which a section of the line or a component of the pipeline is installed can cause serious problems to the line, causing displacements or breakages in the pipeline or component concerned.

Landslides, or in any case subsidence of the ground of a certain importance, are not usually completely sudden phenomena, but are almost always anticipated by clearly identifiable signals, such as modest localized ground displacements, hollows in the surface, formation of surface cracks etc. These signals can precede the actual landslide by hours or even days. In any case, if identified in time, the small changes in the situation in the vicinity of the gas pipeline section at risk can allow protective actions to be taken, and often avoid breakages or serious damage to the pipes or components of the transport line.

Furthermore, in areas particularly subject to landslides, special sections of piping are often installed in the line, which allow to attenuate the effects of small displacements of the surrounding land and of the stresses they create on the line. These pipe sections are made elastic by the presence of spring sections at the ends, and possibly of particular devices called dielectric joints. These solutions allow the line section to contract and expand by a few centimeters in response to the aforementioned stresses. However, it is clear that the effect of these special sections is limited, and cannot compensate for strong pipeline displacements.

PCT patent Application published under No. WO2018/167668, in the name of BARBAGLI, SERENA, discloses a system for the evaluation of a compensation joint inserted in a length of a line for the transport of hydrocarbons or other fluids, between two consecutive sections thereof. The evaluation system comprises deformation detector means, installed between different points of said sections end/or between the latter and the compensation joint, for acquiring deformation data concerning the response of said length of line to mechanical stresses acting thereon.

Computerized procedures are also provided for comparing current readings with corresponding previous readings, stored in a computer memory, for the purpose of detecting and reporting differences between readings that exceed pre-established thresholds, indicative of corresponding movements of the compensation joint with respect to the line sections.

However, no information is obtained regarding the current state of health of the compensation joint.

### TECHNICAL PROBLEM

In any case the aforementioned components, during their useful life, certainly undergo a number of the stresses described above, more or less intense but which, in any case, in the long term, tend to affect their structural integrity, and make them progressively less reliable. Given the importance that these components have in the operation of pipelines, it is therefore essential that the components are always in perfect efficiency and that their operation and that of the pipeline are not endangered by malfunctions due to fatigue and structural aging of the components themselves.

There is therefore a strong need to predict, at least in an approximate way, when a component is in a situation close to the completion of its useful life, in order to be able to replace it before it breaks.

### OBJECTS OF THE INVENTION

**It** is a scope of the present invention to propose a method for evaluating the state of use of a compensation joint, capable of making statistical predictions on the possibility of malfunctions or breakages of the same, before they occur.

Another object of the invention is to make forecasts on the residual useful life of the compensation joint, on the basis of the stresses sustained by the same during its use, and to make these forecasts available.

Another purpose of the invention is to propose an evaluation method capable of providing early warning information for potentially critical situations for the section or for the monitored transport line component.

### SUMMARY OF THE INVENTION

These and other purposes are fully achieved by a method for monitoring a section of a line for the transport of hydrocarbons, for example a methane pipeline, which comprises a compensation joint provided with elastic elements which connect consecutive sections of the line section; the aforementioned method comprises the following operating steps:
- the acquisition, by means of deformation detectors installed between different points of the sections and/or between the latter and the compensation joint, of deformation data concerning the response of the line section to mechanical stresses occurring on it;
- the forwarding to a computerized central unit, equipped with an interface for the deformation detection means, of the data detected in the form of digital or analog signals;
- the processing, by means of computer programs that implement suitable evaluation algorithms, of the deformation data and including the number, directions and extent of the aforementioned deformations, to obtain an indicative evaluation of the predictable residual useful life of the compensation joint, evaluation being based on a plurality of reference parameters and/or threshold values stored in said programs or algorithms;
- the periodic production of a report relating to the state of integrity of the compensation joint and to the residual useful life that can be assumed for it.

### BRIEF DESCRIPTION OF THE DRAWINGS

The characteristic features of the invention will become evident from the following description of preferred embodiments of the method for monitoring a section or component of a line for the transport of hydrocarbons, in accordance with the following claims and with the aid of the annexes drawing tables, in which:
- Fig. 1 shows schematically a preferred embodiment of a system for monitoring a section of a line for the transport of hydrocarbons, comprising a compensation joint to which the evaluation method according to the invention is applied;
- Fig. 2 illustrates, schematically but in greater detail, the autonomous electric generator of figure 1.

### DESCRIPTION OF PREFERRED EMBODIMENTS OF THE INVENTION

In the figures listed above reference 100 indicates, as a whole and as an example of implementation of this method, a monitoring system of a section of line for the transport of hydrocarbons, and in particular of a methane pipeline, comprising a particular component, such as a compensation joint 21. For the sake of simplicity, reference will be made in the following to a section of methane pipeline 1; it is however to be understood that the method according to the invention is equally advantageously applied to line sections and line components for the transport and distribution of other hydrocarbons and other pressurized fluids, such as oil pipelines, aqueducts etc.

The compensation joint 21 to be monitored is generally installed in a site that has serious criticalities, potentially dangerous for the integrity of section 1 or of the component, and therefore for the operation of the entire transport line. In the example of embodiment described, the section 1 or component is installed inside an artifact or a room, for example a closed cabin, often underground or basement.

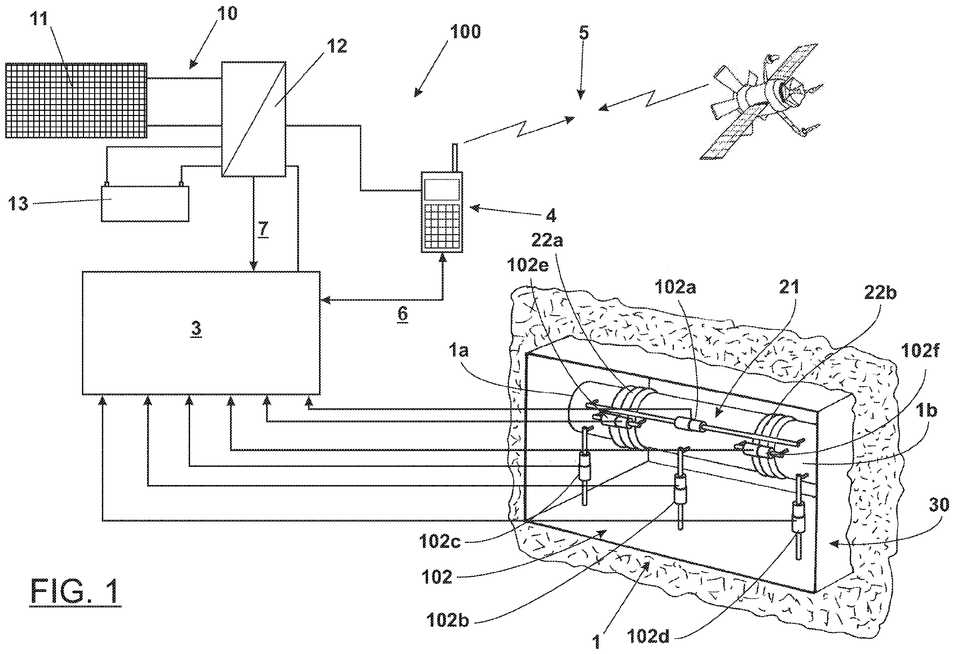

For example, Figure 1 illustrates a closed product 30, of which a portion containing the portion 1 of the line is visible. However, it is understood that the installation site may be different, for example a docking terminal for the transfer of hydrocarbons from ships to land or vice versa, and that its structure is not relevant to the invention. For example, the installation site can be part of a hilly or mountainous territory, subject to landslides and landslides, and therefore unstable.

Given that the section 1 of the methane pipeline or one of its components are anchored to the surface, or even buried, it is clear that any movement of the ground, even of a modest entity, affecting the site, can create stresses such as to cause deformations or breakages in the system. More particularly, the line section 1 can comprise the aforementioned compensation joint 21, which consists of a special segment with elastic connection, designed to undergo extensions and contractions in response to stresses received by the portion of the line on which it is installed due to modest displacements of the surrounding land.

By way of non-exhaustive example, the method according to the invention can be implemented when the line section 1 is defined by one of these special segments, which comprises the compensation joint 21, inserted in an interruption of the line section 1 to connect between them two lengths 1a, 1b thereof, with the interposition of two elastic elements 22a, 22b, of the bellows type. These elastic elements 22a, 22b are intended to accommodate any deformations of modest entity of the section of line 1 without interrupting its continuity, and therefore without interrupting its functionality. It is clear, however, that the occurrence of modest deformations, even if absorbed by the elastic connection segment 21, may indicate subsequent serious problems, and therefore be the subject of attention for planning interventions to contain the deformations themselves and to make them safe. of the gas pipeline.

The monitoring system 100, illustrated in the figures for the implementation of the method according to the present invention, is intended to be installed in correspondence with such risk sites, is able to operate in a completely self-sufficient way, and can be programmable in in order to combine maximum monitoring efficiency with the resources of electricity and communication channels available on the site. In the following, for the sake of simplicity, both the method and the structure of the system 100 will be described with reference to the surveillance of a section 1 of the methane pipeline.

However, it is understood that the method, with a suitable system structure 100, can be indifferently applied also to other components of a line for the transport of methane or other hydrocarbons, such as for example pumping stations, docking terminals, shut-off valves, control units. reduction etc., or to substantially equivalent structures in systems for the transport and distribution of water or other liquids.

The acquisition of data concerning mechanical stresses occurring on said section 1 of the line is advantageously carried out by means of said deformation detection means 102 consisting of a plurality of strain gauges, mounted between different points of the section of line 1, or between significant points of the section 1 of line and the ground, or in any case between these and reference points disconnected from the section 1 of the line, for example the walls of the artifact 30.

The number and arrangement of strain gauges may also vary, without however departing from the scope of the invention. Strain gauges are known and commercially available devices. They generally consist of two elements sliding axially with respect to each other, and include a transducer, which converts the slip into an electrical signal, and an output interface, designed to make the electrical signal obtained available to an external user.

When the method is implemented in the presence of a line section 1 defined by one of the aforementioned special segments, which, as already said, comprising sections 1a, 1b connected to each other by at least one compensation joint 21, installed at an interruption of said section 1 with the interposition of elastic elements 22a, 22b, the aforementioned data concerning mechanical stresses are provided by six strain gauges: first 102a, mounted between the aforementioned lengths of line 1a, 1b and intended to detect the relative displacements of the two aforementioned lengths; second 102b, third 102c and fourth 102d, respectively mounted between the compensation joint 21 and the ground, and between the sections 1a, 1b and the ground; a fifth extensometer 102e and a sixth extensometer 102f mounted between the compensation joint 21 itself and the two lengths 1a, 1b, bypassing the relative elastic elements 22a, 22b.

The configuration of strain gauges described and illustrated above is to be considered as an example, and not exhaustive, of the monitoring possibilities provided by the system 100. Different configurations, including only a part of the strain gauges described above, or other differently arranged strain gauges, can be made for the implementation of the present method.

Strain gauges 102a...102f are connected, through their output interface, to compatible input channels of a computerized central unit 3, equipped with a suitable commercial interface, wired or wireless (for example with "Bluetooth", "Direct Wireless "or other equivalent).

The central unit 3 is installed in a suitable container, according to the characteristics of the site (if the place is open and exposed to bad weather, or closed or otherwise sheltered), and includes a computer program for managing the operations of the monitoring system what will be better specified below. In the operational phase concerning the aforementioned transmission of the report to at least one remote operating center and/or to at least one person in charge of the surveillance of said section 1 of the line, or to other persons authorized to monitor the pipeline, information relating to the status of section 1 is transmitted. monitored, such as data received from strain gauges 102a...102f.

The method provides that said transmission can take place both from the deformation detecting means 102 towards said computerized central unit 3 and vice versa, so as to be able to communicate backwards any commands or updates.

The type of remote transmission means 4 is conveniently selected from those known, available and most suitable for the site; in the case of a site covered by a cellular data network with "3G", "4G" or "5G" technology, for example, the most convenient connection will be a common connection via the Internet, while in the absence of such coverage, the most suitable connection may be a data connection on the network satellite telephone; alternatively, a radio frequency connection can be used by means of two-way radio devices.

The central unit 3 therefore provides for an additional interface 6 and the related software procedures for connection with the aforementioned remote transmission means 4. Since the system 100 provides for the use of strain gauges as deformation detection means 102, the computer program operating in the central unit 3 is equipped with suitable procedures for acquiring and storing the data from said strain gauges.

Procedures are also envisaged to send such data, as received, to the remote operations center or to another authorized person or to process them, before sending, in order to detect significant differences with respect to previous readings or the exceeding of values of a predetermined threshold of attention. In order to make the monitoring system 100 completely self-sufficient, it is envisaged to electrically power said deformation detection means 102, the central unit 3 and the remote transmission means 4 by means of an autonomous solar-powered electric generator 10.

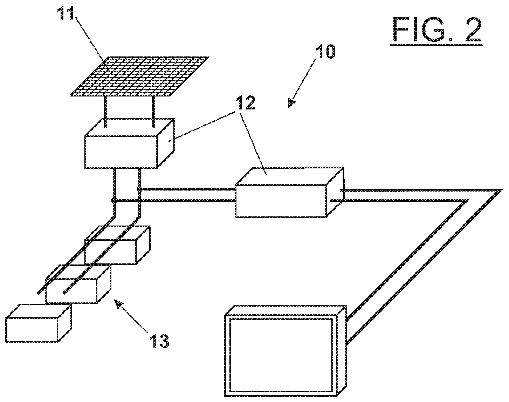

In an advantageous embodiment, illustrated in Figure 2, the electric generator 10 comprises one or more photovoltaic panels 11, an electricity converter device 12 according to the specifications provided for the aforementioned deformation detection means 102, central unit 3 and transmission means remote 4, and a battery 13 of rechargeable accumulators for storing electric charge in the periods of overproduction of the photovoltaic panels, to be supplied in the periods of insufficient production.

In any case, the energy converter device 12 advantageously comprises a data connection 7 with the central unit 3 (of a commercial type, for example via a local network or USB interface), to transmit to it data and information relating to the state of charge of the accumulators and, if necessary, the current energy production of the photovoltaic panels 11.

The management program operating in central unit 3, for this purpose, is suitably provided with a procedure for receiving such information, and for any modification of the system's operation in the event of low energy availability.

Section 1 of the pipeline (or other component) of the methane pipeline subject to monitoring, located for example in a site at risk of landslides, even before the occurrence of an important and damaging event, such as a large landslide that causes breakages or unwanted movements, it can be subject to minor and more gradual stresses, due for example to small displacements of the ground, precursors of a subsequent major landslide. In this case the pipe section 1 can undergo small displacements or deformations, which are not harmful for them, but which if identified can suggest the urgent implementation of preventive consolidation interventions of the site itself, and therefore avoid subsequent problems. Such small displacements or deformations, as well as equally modest displacements of the surrounding ground, may not be adequately appreciated by the personnel authorized to supervise following a superficial evaluation of the data provided by the monitoring system 100 as described above.

Therefore, the method envisages that said transmission of data and/or of the report may include alarm messages designed to draw attention to potentially dangerous situations, and/or to signal any anomalies deriving from modest movements of the indicator elements, and therefore to modest deformations of the pipe section 1 or of the monitored component, or of the surrounding ground or building.

The method for evaluating the state of use of the compensation joint 21 inserted in the section 1 of the line, implemented by means of the monitoring system 100 described above, includes the following operating phases:
- the acquisition, by means of deformation detecting means 102 installed between different points of segments 1a, 1b of the section of line 1 and/or between the latter and said compensation joint 21, of deformation data concerning the response of said section of line 1 to mechanical stresses on it;
- the forwarding to a computerized central unit 3, equipped with an interface for the deformation detection means 102, of the detected data, in the form of digital or analog signals;
- the processing, by means of computer programs that implement suitable evaluation algorithms, of the deformation data and including the number, directions and extent of the aforementioned deformations, to obtain an indicative evaluation of the predictable residual useful life of the aforementioned compensation joint; the evaluation is based on a plurality of reference parameters and/or threshold values stored in the aforementioned programs or algorithms;
- the periodic production of a report relating to the state of integrity of the compensation joint 21 and to the residual useful life that can be assumed for it.

According to a non-exclusive embodiment of the method, the evaluation of the integrity and residual useful life of the compensation joint 21 comprises the comparison of each of the aforementioned deformation data, detected at a given instant of time and for each of the detection means of deformation 102, with a first predefined stress threshold value and with a first predefined breaking threshold value, for example empirically by means of prolonged tests on sample compensation joints.

These first threshold values of stress and failure concern the occurrence of sudden, single stresses of high entity, which may be related to deformations, accelerations or combinations thereof capable, in a statistically significant way, respectively to produce a permanent stress, or to lead the compensation joint 21 in a situation close to breaking.

Following the achievement of these first threshold values, the method provides for the issuance of reports that respectively inform on the occurrence, for the compensation joint 21, of a stress situation or a breakage risk situation, with the consequent reduction of the condition of integrity and/or residual useful life of the same.

Alternatively, or in addition, the aforementioned evaluation of the integrity and residual useful life of the compensation joint 21 includes the comparison of the sum and/or the average of the values of the aforementioned deformation data, detected in a given period of time and for all the deformation detecting means 102, with a second stress threshold value and with a second breaking threshold value, to respectively signal the occurrence, for the same compensation joint 21, of a prolonged stress situation or of a situation risk of breakage, with the consequent reduction of the condition of integrity and / or residual useful life of the same. Also in this case the detected data can include deformation data in extension or compression, acceleration values of each single deformation event, or a combination of both.

On the basis of the data acquired and stored, and of the stress resistance schemes of the compensation joint 21 previously calculated and experimentally verified, and subsequently codified and inserted in the evaluation procedures operating in the central unit 3, it is possible, both to carry out at any time an evaluation of the current state of use of the joint 21, and a reliable forecast of its residual useful life.

According to a main embodiment of the present method, the processing of the deformation data is carried out in the aforementioned central unit 3 before the transmission, by means of remote data transmission means 4, of the aforementioned periodic report to an operating center and/or to a assigned to the surveillance of section 1 of the controlled line.

According to an alternative embodiment, the processing of the deformation data is carried out at a remote operating center, after the transmission carried out by means of the remote data transmission means 4. In this case the central unit 3 is responsible for data transmission. of rough deformation to the operations center, and the latter is responsible for producing the periodic report on the state of use of the compensation joint 21.

The advantages offered by the evaluation method described above consist in making available, in a simple and reliable way, the constantly updated status of the actual wear situation of the compensation joint 21, as well as a forecast of its residual useful life, which would otherwise be impossible. or otherwise difficult and expensive to obtain.

Another advantage of the invention consists in proposing a monitoring system capable of providing, to one or more interested parties authorized to maintain and preserve a transport line, early warning information for potentially critical situations for the section or for the supervised transport line component. It is thus possible to arrange any maintenance interventions with due advance, also considering the particular criticality of the distribution lines concerned and that accessibility to the site of the section in question can be very often difficult.

However, it is understood that what has been described above has an exemplary and non-limiting value, therefore any detailed variations that may be necessary for technical and/or functional reasons, are considered from now on to fall within the same protective scope defined by the claims reported below.

## Claims

1. Method for evaluating a compensation joint (21) inserted in a section of a line for the transport of hydrocarbons or other fluids, said compensation joint (21) being interposed between consecutive sections (1a, 1b) of said section line (1), said method comprising:
- the acquisition, by means of deformation detecting means (102) installed between different points of said segments (1a, 1b) and/or between the latter and said compensation joint (21), of deformation data concerning the response of said segment line (1) to mechanical stresses on it;
- forwarding to a computerized central unit (3), equipped with an interface for said deformation detection means (102), of the aforementioned data in the form of digital or analog signals;
- the processing, by means of computer programs that implement suitable evaluation algorithms, of the aforementioned deformation data and including the number, directions and extent of the aforementioned deformations, to obtain an indicative evaluation of the predictable residual useful life of the aforementioned compensation joint (21), said evaluation being based on a plurality of reference parameters and/or threshold values stored in said programs or algorithms, and comprising the comparison of said deformation data detected by all said deformation detection means (102) with at least one stress threshold value and with at least one breaking threshold value, to respectively signal the occurrence, for the aforementioned compensation joint (21), of a stress situation or a breakage risk situation, with the consequent reduction of the condition of integrity and/or residual useful life of the same; said method being **characterized in that** the aforementioned evaluation of the integrity and of the residual useful life comprises the comparison of each of said deformation data detected is made at a given instant of time and for each of the said deformation detection means (102) with a first stress threshold value and with a first breaking threshold value, to respectively signal the occurrence, for the aforementioned compensation joint (21), of a sudden stress situation or a breakage risk situation, with the consequent reduction of the condition of integrity and/or residual useful life of the same;
- the periodic production of a report relating to the state of integrity of the aforementioned compensation joint (21) and to the residual useful life that can be assumed for it.

2. Method according to claim 1, **characterized in that** the aforementioned evaluation of the integrity and residual useful life includes the comparison of said deformation data detected is made considering the sum and/or the average of the values of said deformation data detected in a given period of time and for all the aforementioned deformation detection means (102) with a second stress threshold value and with a second breaking threshold value, to respectively signal the occurrence, for the aforementioned compensation joint (21), of a prolonged stress situation or of a situation of risk of breakage, with the consequent reduction of the condition of integrity and/or residual useful life of the same.

3. Method according to claim 1 or claim 2, **characterized in that** said deformation data comprise the extension or compression values detected by each of the aforementioned deformation detecting means (102).

4. Method according to claim 1, **characterized in that** said deformation data comprise the acceleration values detected by each of the aforementioned deformation detecting means (102).

5. Method according to claim 1, **characterized in that** the aforementioned processing of deformation data is carried out in said central unit (3), before the transmission, by means of remote data transmission means (4), of said periodic report to at least an operations center and/or at least one person in charge of the surveillance of said line section (1).

6. Method according to claim 1, **characterized in that** the aforementioned processing of deformation data is carried out at a remote operating center, after the transmission carried out by means of remote data transmission (4), said central unit (3) being designated the transmission of the aforementioned raw deformation data to said operations center, the latter being responsible for producing the aforementioned periodic report.

## Patentansprüche

1. Verfahren zur Bewertung einer Kompensationsdichtung (21), die in einen Abschnitt einer Leitung für den Transport von Kohlenwasserstoffen oder anderen Flüssigkeiten eingefügt ist, wobei die Kompensationsdichtung (21) zwischen aufeinanderfolgenden Abschnitten (1a, 1b) der Abschnitt der Leitung (1) angeordnet ist, wobei das Verfahren umfasst:
- die Erfassung von Verformungsdaten über die Reaktion der Abschnitt der Leitung (1) auf mechanische Beanspruchungen mittels Verformungserfassungsmitteln (102), die zwischen verschiedenen Punkten der Abschnitte (1a, 1b) und/oder zwischen diesen und der Kompensationsdichtung (21) installiert sind;
- die Weiterleitung der vorgenannten Daten in Form von digitalen oder analogen Signalen an eine rechnergestützte Zentraleinheit (3), die mit einer Schnittstelle für die Verformungserfassungsmittel (102) ausgestattet ist;
- die Verarbeitung der vorgenannten Verformungsdaten, einschließlich der Anzahl, der Richtungen und des Ausmaßes der vorgenannten Verformungen, mit Hilfe von Computerprogrammen, die geeignete Auswertealgorithmen implementieren, um eine indikative Auswertung der vorhersehbaren Restnutzungsdauer des vorgenannten Kompensationsdichtung (21) zu erhalten, die Auswertung auf einer Vielzahl von Referenzparametern und/oder Schwellenwerten basiert, die in den Programmen oder Algorithmen gespeichert sind, und den Vergleich der von allen Verformungserfassungsmitteln (102) erfassten Verformungsdaten mit mindestens einem Spannungsschwellenwert und mit mindestens einem Bruchschwellenwert umfasst, um jeweils das Auftreten einer Spannungssituation oder einer Bruchrisikosituation für das oben genannte Kompensationsdichtung (21) mit der daraus folgenden Verringerung des Integritätszustands und/oder der Restnutzungsdauer desselben zu signalisieren; wobei das Verfahren **dadurch gekennzeichnet ist, dass** die vorgenannte Bewertung der Unversehrtheit und der Restnutzungsdauer den Vergleich jeder der erfassten Verformungsdaten zu einem gegebenen Zeitpunkt und für jedes der Verformungserfassungsmittel (102) mit einem ersten Belastungsschwellenwert und mit einem ersten Bruchschwellenwert umfasst, um für die vorgenannte Kompensationsdichtung (21) das Auftreten einer plötzlichen Belastungssituation oder einer Bruchrisikosituation mit der sich daraus ergebenden Verringerung des Unversehrtheitszustands und/oder der Restnutzungsdauer derselben zu melden; die periodische Erstellung eines Berichts über den Integritätszustand des genannten Kompensationsdichtung (21) und über die für dieses anzunehmende Restnutzungsdauer.

2. Verfahren nach Anspruch 1, **dadurch gekennzeichnet, dass** die vorgenannte Bewertung der Unversehrtheit und der Restnutzungsdauer den Vergleich der erfassten Verformungsdaten unter Berücksichtigung der Summe und/oder des Durchschnitts der Werte der in einem gegebenen Zeitraum und für alle vorgenannten Verformungserfassungsmittel (102) erfassten Verformungsdaten mit einem zweiten Belastungsschwellenwert und mit einem zweiten Bruchschwellenwert umfasst, um für die vorgenannte Kompensationsdichtung (21) das Auftreten einer anhaltenden Belastungssituation bzw. einer Situation der Bruchgefahr mit der sich daraus ergebenden Verringerung des Zustands der Unversehrtheit und/oder der Restnutzungsdauer derselben zu signalisieren.

3. Verfahren nach Anspruch 1 oder Anspruch 2, **dadurch gekennzeichnet, dass** die Verformungsdaten die Dehnungs- oder Stauchungswerte umfassen, die von jedem der vorgenannten Verformungserfassungsmittel (102) erfasst werden.

4. Verfahren nach Anspruch 1, **dadurch gekennzeichnet, dass** die Verformungsdaten die von jedem der vorgenannten Verformungserfassungsmittel (102) erfassten Beschleunigungswerte umfassen.

5. Verfahren nach Anspruch 1, **dadurch gekennzeichnet, dass** die vorgenannte Verarbeitung der Verformungsdaten in der Zentraleinheit (3) durchgeführt wird, bevor der periodische Bericht mittels Datenfernübertragungsmitteln (4) an mindestens eine Betriebszentrale und/oder mindestens eine mit der Überwachung des Streckenabschnitts (1) betraute Person übertragen wird.

6. Verfahren nach Anspruch 1, **dadurch gekennzeichnet, dass** die vorgenannte Verarbeitung der Verformungsdaten in einer entfernten Betriebszentrale erfolgt, nachdem die Übertragung mittels Datenfernübertragung (4) erfolgt ist, die genannte Zentraleinheit (3) für die Übertragung der vorgenannten Rohdaten der Verformung an die genannte Betriebszentrale bestimmt ist, wobei letztere für die Erstellung des vorgenannten periodischen Berichts verantwortlich ist.

## Revendications

1. Procédé d'évaluation d'un joint de compensation (21) inséré dans un tronçon d'une ligne de transport d'hydrocarbures ou d'autres fluides, ledit joint de compensation (21) étant interposé entre des tronçons consécutifs (1a, 1b) de ladite tronçon de ligne (1), ledit procédé comprenant:
- l'acquisition, par l'intermédiaire de moyens de détection de déformation (102) installés entre différents points desdits tronçons (1a, 1b) et/ou entre ces derniers et ledit joint de compensation (21), de données de déformation concernant la réponse de ladite tronçon de ligne (1) à des sollicitations mécaniques sur celle-ci;
- la transmission à une unité centrale informatisée (3), équipée d'une interface pour lesdits moyens de détection de déformation (102), des données susmentionnées sous forme de signaux numériques ou analogiques;
- le traitement, par l'intermédiaire de programmes informatiques qui mettent en oeuvre des algorithmes d'évaluation appropriés, des données de déformation susmentionnées, y compris le nombre, les directions et l'étendue des déformations susmentionnées, pour obtenir une évaluation indicative de la durée de vie utile résiduelle prévisible de l'articulation de compensation susmentionnée (21), ladite évaluation est basée sur une pluralité de paramètres de référence et/ou de valeurs de seuil stockés dans lesdits programmes ou algorithmes, et comprenant la comparaison desdites données de déformation détectées par tous lesdits moyens de détection de déformation (102) avec au moins une valeur de seuil de contrainte et avec au moins une valeur de seuil de rupture, pour signaler respectivement l'apparition, pour l'articulation de compensation susmentionnée (21), d'une situation de contrainte ou d'une situation de risque de rupture, avec la réduction conséquente de l'état d'intégrité et/ou de la durée de vie utile résiduelle de cette dernière; ledit procédé étant **caractérisé en ce que** l'évaluation susmentionnée de l'intégrité et de la durée de vie résiduelle comprend la comparaison de chacune des données de déformation détectées à un instant donné et pour chacun des moyens de détection de déformation (102) avec une première valeur seuil de contrainte et avec une première valeur seuil de rupture, pour signaler respectivement l'apparition, pour l'articulation de compensation (21) susmentionnée, d'une situation de contrainte soudaine ou d'une situation de risque de rupture, avec la réduction conséquente de la condition d'intégrité et/ou de la durée de vie résiduelle de cette dernière;
- la production périodique d'un rapport relatif à l'état d'intégrité du joint de compensation (21) susmentionné et à la durée de vie résiduelle que l'on peut supposer pour celui-ci.

2. Procédé selon la revendication 1, **caractérisé en ce que** l'évaluation susmentionnée de l'intégrité et de la durée de vie résiduelle comprend la comparaison desdites données de déformation détectées est effectuée en considérant la somme et/ou la moyenne des valeurs desdites données de déformation détectées dans une période de temps donnée et pour tous les moyens de détection de déformation susmentionnés (102) avec une deuxième valeur de seuil de contrainte et avec une deuxième valeur de seuil de rupture, pour signaler respectivement l'apparition, pour le joint de compensation susmentionné (21), d'une situation de contrainte prolongée ou d'une situation de risque de rupture, avec la réduction conséquente de l'état d'intégrité et/ou de la durée de vie résiduelle de ce dernier.

3. Procédé selon la revendication 1 ou la revendication 2, **caractérisé en ce que** lesdites données de déformation comprennent les valeurs d'extension ou de compression détectées par chacun des moyens de détection de déformation (102) susmentionnés.

4. Procédé selon la revendication 1, **caractérisé en ce que** lesdites données de déformation comprennent les valeurs d'accélération détectées par chacun des moyens de détection de déformation (102) précités.

5. Procédé selon la revendication 1, **caractérisé en ce que** le traitement précité des données de déformation est effectué dans ladite unité centrale (3), avant la transmission, au moyen de moyens de transmission de données à distance (4), dudit rapport périodique à au moins un centre d'exploitation et/ou à au moins une personne chargée de la surveillance de ledit tronçon de ligne (1).

6. Procédé selon la revendication 1, **caractérisé en ce que** le traitement susmentionné des données de déformation est effectué dans un centre d'exploitation distant, après la transmission effectuée au moyen de la transmission de données à distance (4), ladite unité centrale (3) est désignée pour la transmission des données de déformation brutes susmentionnées audit centre d'exploitation, ce dernier étant chargé de produire le rapport périodique susmentionné.
